# EUROPEAN PATENT SPECIFICATION

(11) **EP 2 066 918 B1**
(45) Date of publication and mention of the grant of the patent: **06.04.2011**
(21) Application number: 07820589.5
(22) Date of filing: 26.09.2007
(51) Int. Cl.: F16G 5/16

(54) **TRANSVERSE ELEMENT FOR A DRIVE BELT FOR A CONTINUOUSLY VARIABLE TRANSMISSION**
QUERELEMENT FÜR EINEN ANTRIEBSRIEMEN FÜR EIN STUFENLOSES GETRIEBE
ELEMENT TRANSVERSAL POUR COURROIE D'ENTRAINEMENT DESTINE A UNE TRANSMISSION A VARIATION CONTINUE

(30) Priority: 29.09.2006 NL 1032596
(43) Date of publication of application: 10.06.2009
(73) Proprietor: Robert Bosch GmbH, 70442 Stuttgart (DE)
(72) Inventor: JONKERS, Joost Johannes Cornelis, 5126 BH Gilze (NL); VAN DER MEER, Cornelis Johannes Maria, 5032 XG Tilburg (NL)
(74) Representative: Plevier, Gabriel Anton Johan Maria
(86) International application number: PCT/EP2007/060194
(87) International publication number: WO 2008/037729

(56) References cited:
- EP-A1- 0 626 526
- WO-A-03/078860
- JP-A- 2 283 936
- JP-A- 2005 221 010
- US-A1- 2001 051 554

## Description

The present invention relates to a transverse element for a drive belt for a continuously variable transmission having two pulleys, each composed of two pulley sheaves, with an at least partially conical contact surface, in order in pairs to clamp the drive belt in place. The known drive belt comprises one or more sets of endless, i.e. continuous, band-like rings, on which a large number of relatively thin transverse elements are arranged more or less consecutively such that they can move along the circumference thereof. For this purpose, the transverse elements are provided with a recess for at least partially accommodating a set of rings. A drive belt of this type is known, for example, from European patent publication EP-A-0626526, and is also known by the term (Van Doorne) push belt. JP2005221010 and WO03/078860 disclose a transverse element comprising the features of the preamble of the independent claims.

The known transverse element is provided with two recesses and is composed of a base part located radially inside said recess, a connecting piece located between the recesses, and a head part located radially outside the recesses. The base part, on at least one main side thereof, is provided with a so-called tilting region, which extends in the axial direction along it and forms a transition between a radially outermost or top part of the transverse element with an at least approximately constant, nominal thickness and a radially innermost or bottom part thereof with a thickness that decreases in the radially inward direction, i.e. that at least effectively tapers in said direction. Partly as a result of this configuration, the transverse elements which adjoin one another in the drive belt can tilt with respect to one another and the drive belt as a whole is flexible in the circumferential direction, with a minimum bending radius of the drive belt being determined by the degree of taper of said bottom part of the transverse element.

Transverse elements of this type are cut of sheet material in a (precision) stamping process and finished. A known finishing process is the barrel process, wherein a number of transverse elements are vibrated together with barrel shot, with the shot striking the transverse elements in such a manner as to remove any (stamping) burrs and to round the peripheral edges of the transverse elements. At least in the barrel process, but also in other possible remachining processes, two or more transverse elements may become nested together, in which case part of a first transverse element is received inside the recess of a second transverse element. If the height of a recess, i.e. the distance in the radial direction between the top side of the base part and the underside of the head part at the location of the recess is approximately equal to the thickness of the transverse element, the said two transverse elements may even become jammed together. In this context, it should be noted that at least the height of the recesses is generally a given parameter for a specific type of drive belt, i.e. is determined by the radial thickness of the set of rings intended to be received therein plus a defined clearance.

One disadvantageous consequence of this nesting phenomenon is that the transverse elements in question can suffer damage or even be deformed as a result. In addition, in the barrel process described the barrel shot may have a locally reduced or possibly even inadequate effect on the transverse elements in question. These transverse elements may ultimately prove unsuitable for use in the drive belt, in which case they are removed from the manufacturing process as scrap.

According to the invention, the effectiveness of the manufacturing process can be improved by avoiding or at least reducing this scrap as a result of the transverse element being dimensioned in such a way that said nominal thickness thereof is at least 3% less than said height of the recesses thereof.

Tests have established that transverse elements of this type do not become jammed together, or at least do not do so permanently, with the result that any transverse elements which do become nested together will easily and quickly fall apart again. If the difference between the abovementioned dimensions of the transverse element is more than 10%, no further significant improvement is achieved, and a difference of approximately 8% is optimum, because then the standard production or dimensional tolerances of around 5% are overcome with regard to the abovementioned difference.

On the other hand, according to the invention a second possibility is for the minimum thickness of the transverse element, i.e. the thickness on the underside thereof, to be more than 3%, preferably approximately 8 to 10%, greater than the height of the recesses thereof. In this case, it will be impossible for the transverse elements to become jammed together or even to nest in one another.

One drawback of this second possibility is that the nominal thickness required for the transverse element will be relatively high, since in the transverse elements used in practice the nominal thickness is generally some 20% greater than the said minimum thickness thereof, while the nominal transverse element thickness currently used in practice, namely 1.5 to 1.8 mm, is considered optimum in terms of functionality, including low levels of noise emissions in operation, as well as producibility.

In a third configuration according to the invention, the abovementioned drawback is overcome by dimensioning the transverse element in such a way that said nominal thickness is at least 3% greater than the height of the recesses, that said minimum thickness is at least 3% less than the height and that where the thickness of the transverse element corresponds to said height the main planes or the front and rear surfaces of the transverse element are oriented at an angle of at least 8 degrees and preferably 10 degrees with respect to one another. Although on the first glance transverse elements of this type could become jammed together, the use of the abovementioned angle serves to ensure that such jamming cannot occur or at least will be unstable, i.e. temporary. Tests have established that in the barrel process a nested set of transverse elements of this type can be quickly and easily shaken apart. An angle of 90 degrees between the front and rear surfaces of the transverse element has proven the most effective, since this will prevent the abovementioned jamming from occurring at all.

The invention is explained in more detail below on the basis of the following description of a transverse element according to the invention and with reference to the drawing, wherein:
Figure 1 shows a diagrammatic cross section through a continuously variable transmission with a drive belt;
Figure 2 shows a diagrammatic side view of part of the transmission with drive belt shown in Figure 1;
Figure 3a shows a front view of a transverse element of the drive belt;
Figure 3b shows a side view of a transverse element of the drive belt;
Figure 4 shows a set of nested transverse elements;
Figure 5 shows front and side views of a transverse element according to a first preferred embodiment according to the invention; and
Figure 6 shows front and side views of a transverse element according to a second preferred embodiment of the invention.

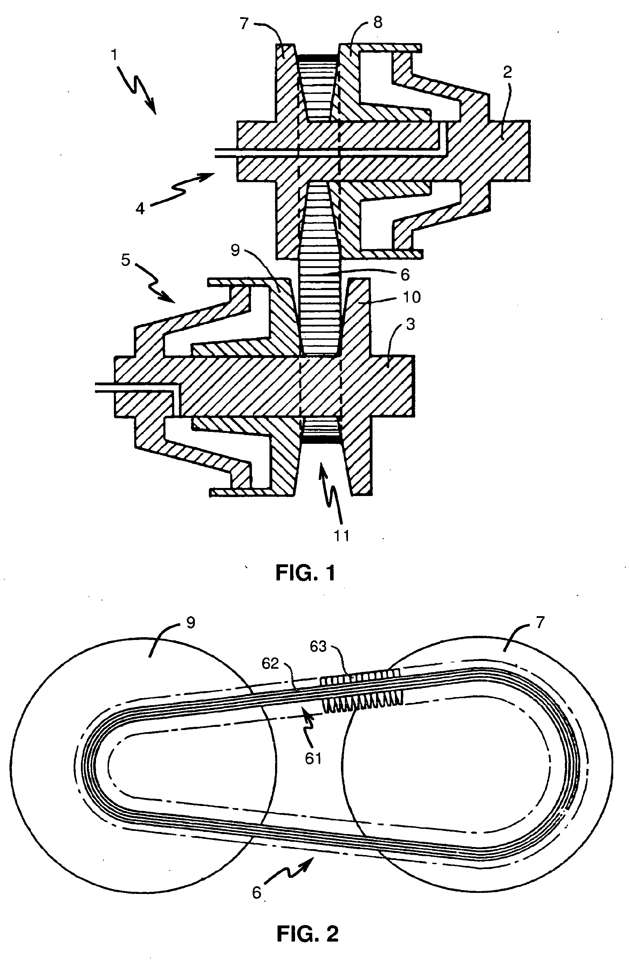

Figures 1 and 2 diagrammatically depict a continuously variable transmission, for example for use in a motor vehicle. The continuously variable transmission is denoted overall by reference numeral 1.

The continuously variable transmission 1 comprises two pulleys 4 and 5 arranged on separate pulley axles 2 and 3. An endless, continuous drive belt 6 is arranged around the pulleys 4 and 5 and is used to transmit torque between the pulley axles 2 and 3. The pulleys 4 and 5 are each provided with two conical pulley sheaves 7 and 8, 9 and 10, respectively, which together form a tapering receiving groove 11 which receives the drive belt 6. The transmission ratio of the continuously variable transmission is determined by the ratio of the running radii of the drive belt 6 in the receiving groove 11 of the respective pulleys 4 and 5. The running radii can be varied by moving the pulley sheaves 7 and 8, 9 and 10, respectively, towards or away from one another with the aid of displacement means, which are not shown for the sake of simplicity. At least one of the pulley sheaves 7 and 8, 9 and 10, respectively, is to this end configured such that it can be moved in the axial direction. To transmit a torque between the pulley axles 2 and 3, the drive belt 6 is clamped with a defined clamping force in the receiving groove 11 of the pulleys 4 and 5.

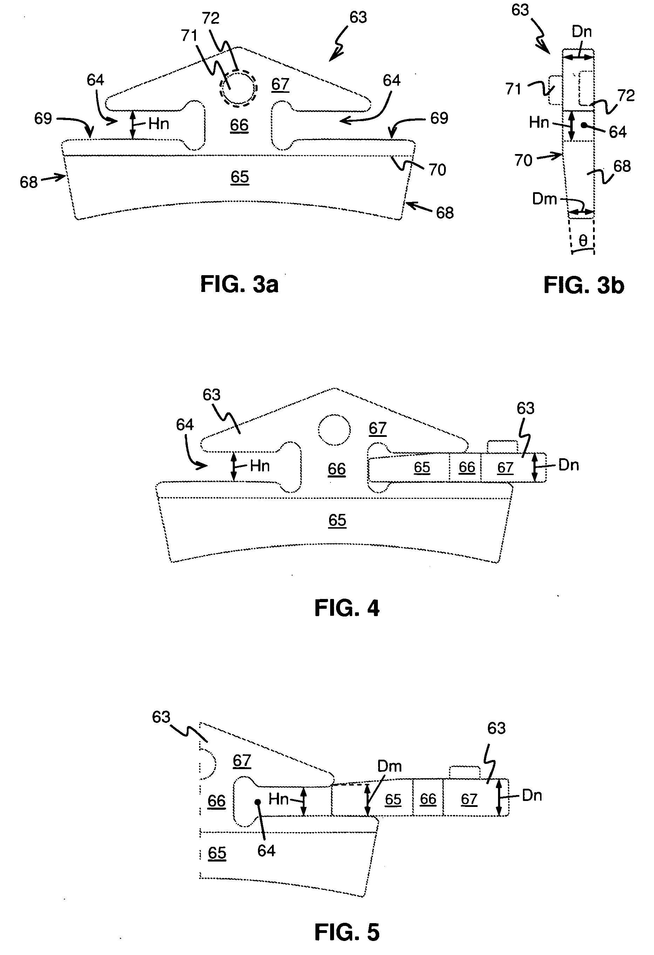

Figure 2 shows a simplified axial cross section through the transmission 1 from Figure 1, wherein the drive belt 6 comprises a set of rings 61 composed of a number of stacked and continuous flat rings 62 as well as a considerable number of transverse elements 63, of which only a limited number are shown in the side view of Figure 2, for the sake of simplicity. The transverse element 63 of the drive belt is shown in front view in Figure 3a, i.e. as seen in the tangential or circumferential direction of the drive belt 6, and in side view in Figure 3b, i.e. in the axial direction.

As shown in Figures 3a and 3b, the known transverse element 63 is provided on either side with a recess 64 for at least partially receiving a set of rings 61 of the drive belt 6, which in the present exemplary embodiment therefore comprises two such sets of rings 61. Furthermore, the known transverse element 63 is composed of a base part 65 located radially inside said recesses 64, a connecting piece 66 located between the recesses 64 and a head part 67 located radially outside the recesses 64. Here, the nominal height Hn of a recess 64, i.e. the smallest distance in the radial direction between the top side of the base part 65 and the underside of the head part 67 virtually corresponds to the radial thickness of the set of rings 61 plus a small clearance.

The axial ends of the base part 65 are formed by two pulley sheave contact surfaces 68 which diverge in the radially outward direction and are intended for frictional contact with said pulley sheaves 6-9. In addition, the base part 65 is provided with two ring-set contact surfaces 69, referred to for short as saddle surfaces 69, which are directed radially outwards, are located on either side of the connecting piece 66 and are intended for frictional contact with one of the sets of rings 61.

The known transverse element 63 is also provided with a stud 71 and with an indentation 72; in the drive belt 6, the stud 71 of a first of two successive transverse elements 63 is received in the indentation 72 of the second transverse element 63 in order for these two elements to be positioned with respect to one another. The base part 65 of the transverse element 63 is also provided in a first main plane, i.e. its front surface, with what is known as a tilting zone 70, which extends in the axial direction between the pulley sheave contact surfaces 68 thereof and forms a transition between a top part of the transverse element 63 provided with a more or less constant thickness, specifically the nominal transverse element thickness Dn, and a bottom part thereof, which tapers radially inwards, i.e. the thickness of which decreases in said direction down to a smallest value Dm. Partly as a result, the transverse elements 63 can tilt with respect to one another in the drive belt 6 and the drive belt 6 overall is thereby flexible in the circumferential direction.

In the drive belts 6 which are currently in production, the angle θ at which the front surface of the transverse element 63 is oriented with respect to a rear surface thereof in the tapering bottom part of the transverse element is approximately 4 to 5 degrees. This angle θ is required in order, at the nominal transverse element thickness Dn of approximately 2 mm used in practice, to allow the minimum bending radius of the drive belt 6 of around 30 mm as used in practice to be implemented. A larger angle θ is not used in practice, since otherwise the surface of the pulley sheave contact surfaces 68 of the transverse element 63 would become unnecessary and undesirable.

Figure 4 shows a set of transverse elements 63 which are nested together and wherein a part of the base part 65 of a first transverse element 63 is received in the recess 64 of a second transverse element 63. Since the nominal thickness Dn of the transverse elements 63 is approximately equal to the nominal height Hn of the recesses 64 thereof, the transverse elements 63 become jammed together. As a result, during the drive belt 6 manufacturing process the transverse element 63 may become damaged, deformed and/or be insufficiently remachined locally. According to the invention, this problem and/or these drawbacks can be avoided by selecting the nominal thickness Dn of the transverse elements 63 in such a manner as to correspond to 90% to 97%, preferably approximately 92% of the nominal height Hn of the recesses 64 thereof. Although transverse elements 63 of this type can still become nested together, in practice it has been found that they do not become jammed when they do so. As a result, a nested set of transverse elements 63 will easily be able to drop apart again. As a result of the measure according to the invention, the risk of damage, deformation and insufficient remachining is considerably reduced.

An alternative solution according to the invention to the abovementioned problem is illustrated in Figure 5 on the basis of a first preferred embodiment of the invention. In this first preferred embodiment, the minimum or smallest thickness Dm of the transverse element 63 at the location of the underside of the base part 65 thereof is approximately 10% greater than the nominal height Hn of the recesses 64 thereof. Transverse elements 63 of this type cannot nest together at all, let alone become jammed together.

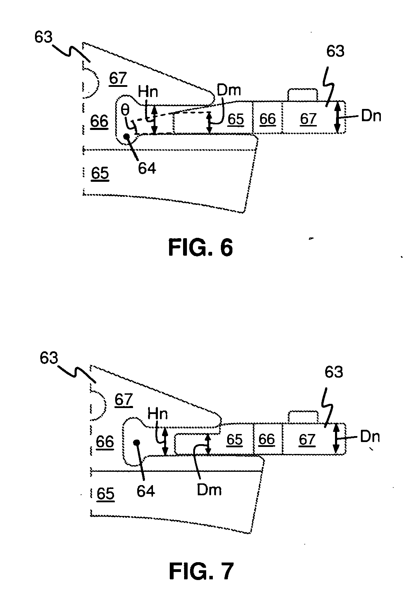

Depending on the nominal height Hn required for the recesses 64, the abovementioned solution may lead to a transverse element 63 with a relatively large nominal thickness Dn, which may be undesirable in some cases. For this situation, a second preferred embodiment of the invention provides a solution which is illustrated with reference to Figures 6 and 7. The transverse element 63 illustrated in Figure 6 is characterized by:
- a nominal thickness Dn which is at least 3% greater than the height Hn of the recesses 64 thereof
- a minimum thickness Dm which is at least 3% less than the height Hn of the recesses 64 thereof, and
- an angle θ of approximately 10 degrees between the front and rear surfaces of the transverse element 63 where the local thickness of the transverse element 63 corresponds to the height Hn of the recesses 64 thereof, i.e. at the location of the contact point or contact line between two transverse elements 63 which are nested together (see Figure 6).

Although transverse elements 63 of this type can become nested together, in practice it has been found that they cannot become permanently jammed together. As a result, a nested set of these transverse elements 63 can easily drop apart again.

In the variant of the transverse element 63 according to the invention illustrated in Figure 7, a stepped transition is realized between the nominal thickness Dn of the transverse element 63 and the minimum thickness Dm of the underside of the base part 65 thereof. This configuration is such that the abovementioned angle θ is a right angle, i.e. approximately 90 degrees. A variant solution according to the invention of this type is particularly effective since transverse elements 63 of this type are inexpensive to produce and cannot become jammed together at all.

## Claims

1. Transverse element (63) for a drive belt (6) for a continuously variable transmission (2) having two pulleys (4, 5), each composed of two pulley sheaves (7, 8; 9, 10), with an at least partially conical contact surface, which In pairs enclose the drive belt (6), which transverse element is provided with a recess (64) for at least partially accommodating a set of rings (61) of the drive belt (6), and which element comprises a base part (65) located radially inside the recess (64), a head part (67) located radially outside the recess (64) and a connecting piece (66) located between the base part and the head part, wherein a nominal height Hn of the recess (64) is defined by the minimal radial distance between the base part (65) and the head part (67) and wherein the base part (65), in a first main plane of the transverse element, is provided with a tilting region (70) which forms a transition between a top part of the transverse element (63) with a substantially constant, nominal thickness Dn of the transverse element (63) and a bottom part thereof, the thickness of which decreases in the radially inward direction to a smallest thickness Dm of the transverse element (63), **characterized in that** the nominal thickness Dn of the transverse element (63) is between 90% and 97%, preferably 92%, of the nominal height Hn of the recess (64),

2. Transverse element (63) for a drive belt (6) for a continuously variable transmission (1) having two pulleys (4, 5), each composed of two pulley sheaves (7, 8; 9, 10), with an at least partially conical contact surface, which in pairs enclose the drive belt (6), which transverse element is provided with a recess (64) for at least partially accommodating a set of rings (61) of the drive belt (6), and which element comprises a base part (65) located radially inside the recess (64), a head part (67) located radially outside the recess (64) and a connecting piece (66) located between the base part and the head part, wherein a nominal height Hn of the recess (64) is defined by the minimal radial distance between the base part (65) and the head part (67) and wherein the base part (65), in a first main plane of the transverse element, is provided with a tilting region (70) which forms a transition between a top part of the transverse element (63) with a substantially constant, nominal thickness Dn of the transverse element (63) and a bottom part thereof, the thickness of which decreases in the radially inward direction to a smallest thickness Dm of the transverse element (63), **characterized in that** the smallest thickness Dm of the transverse element (63) is between 103% and 110% of the nominal height Hn of the recess (64).

3. Transverse element (63) for a drive belt (6) for a continuously variable transmission (1) having two pulleys (4, 5), each composed of two pulley sheaves (7, 8; 9, 10), with an at least partially conical contact surface, which in pairs enclose the drive belt (6), which transverse element is provided with a recess (64) for at least partially accommodating a set of rings (61) of the drive belt (6), and which element comprises a base part (65) located radially inside the recess (64) a head part (67) located radially outside the recess (64) and a connecting piece (66) located between the base part and the head part, wherein a nominal height Hn of the recess (64) is defined by the minimal radial distance between the base part (65) and the head part (67) and wherein the base part (65), in a first main plane of the transverse element, is provided with a tilting region (70) which forms a transition between a top part of the transverse element (63) with a substantially constant, nominal thickness Dn of the transverse element (63) and a bottom part thereof, the thickness of which decreases in the radially inward direction to a smallest thickness Dm of the transverse element (63), **characterized in that**
- the nominal thickness Dn of the transverse element (63) is greater than 103% of the nominal height Hn of the recesses (64),
- the minimum thickness Dm of the transverse element (63) is less than 97% of the nominal height Hn of the recesses (64), and **in that**
- where the local thickness of the transverse element (63) corresponds to the nominal height Hn of the recesses (64) said first main plane and a second main plane of the transverse element (63) are oriented at a angle θ of at least 8 degrees, preferably approximately 10 degrees, with respect to one another.

## Patentansprüche

1. Querelement (63) für einen Antriebsriemen (6) für ein stufenloses Getriebe (1) mit zwei Rollen (4, 5), die jeweils aus zwei Rollenscheiben (7, 8; 9, 10) mit mindestens einer teilweise konischen Kontaktfläche bestehen, die in Paaren den Antriebsriemen (6) umschließen, wobei das Querelement mit einer Aussparung (64) zur zumindest teilweisen Aufnahme eines Satzes von Ringen (61) des Antriebsriemens (6) versehen ist, und wobei das Element einen Basisteil (65), der radial innerhalb der Aussparung (64) angeordnet ist, einen Kopfteil (67), der radial außerhalb der Aussparung (64) angeordnet ist, und ein Verbindungsteil (66), das zwischen dem Basisteil und dem Kopfteil angeordnet ist, umfasst, wobei eine Nennhöhe Hn der Aussparung (64) durch den minimalen radialen Abstand zwischen dem Basisteil (65) und dem Kopfteil (67) definiert wird, und wobei der Basisteil (65) in einer ersten Hauptebene des Querelements mit einem Kippbereich (70) versehen ist, der einen Übergang zwischen einem Oberteil des Querelements (63) mit einer im Wesentlichen konstanten Nenndicke Dn des Querelements (63) und einem Unterteil davon bildet, wobei die Dicke davon in radial nach innen verlaufender Richtung auf eine kleinste Dicke Dm des Querelements (63) abnimmt, **dadurch gekennzeichnet, dass** die Nenndicke Dn des Querelements (63) zwischen 90% und 97%, vorzugsweise 92%, der Nennhöhe Hn der Aussparung (64) liegt.

2. Querelement (63) für einen Antriebsriemen (6) für ein stufenloses Getriebe (1) mit zwei Rollen (4, 5), die jeweils aus zwei Rollenscheiben (7, 8; 9, 10) mit mindestens einer teilweise konischen Kontaktfläche bestehen, die in Paaren den Antriebsriemen (6) umschließen, wobei das Querelement mit einer Aussparung (64) zur zumindest teilweisen Aufnahme eines Satzes von Ringen (61) des Antriebsriemens (6) versehen ist, und wobei das Element einen Basisteil (65), der radial innerhalb der Aussparung (64) angeordnet ist, einen Kopfteil (67), der radial außerhalb der Aussparung (64) angeordnet ist, und ein Verbindungsteil (66), das zwischen dem Basisteil und dem Kopfteil angeordnet ist, umfasst, wobei eine Nennhöhe Hn der Aussparung (64) durch den minimalen radialen Abstand zwischen dem Basisteil (65) und dem Kopfteil (67) definiert wird, und wobei der Basisteil (65) in einer ersten Hauptebene des Querelements mit einem Kippbereich (70) versehen ist, der einen Übergang zwischen einem Oberteil des Querelements (63) mit einer im Wesentlichen konstanten Nenndicke Dn des Querelements (63) und einem Unterteil davon bildet, wobei die Dicke davon in radial nach innen verlaufender Richtung auf eine kleinste Dicke Dm des Querelements (63) abnimmt, **dadurch gekennzeichnet, dass** die kleinste Dicke Dm des Querelements (63) zwischen 103% und 110% der Nennhöhe Hn der Aussparung (64) liegt.

3. Querelement (63) für einen Antriebsriemen (6) für ein stufenloses Getriebe (1) mit zwei Rollen (4, 5), die jeweils aus zwei Rollenscheiben (7, 8; 9, 10) mit mindestens einer teilweise konischen Kontaktfläche bestehen, die in Paaren den Antriebsriemen (6) umschließen, wobei das Querelement mit einer Aussparung (64) zur zumindest teilweisen Aufnahme eines Satzes von Ringen (61) des Antriebsriemens (6) versehen ist, und wobei das Element einen Basisteil (65), der radial innerhalb der Aussparung (64) angeordnet ist, einen Kopfteil (67), der radial außerhalb der Aussparung (64) angeordnet ist, und ein Verbindungsteil (66), das zwischen dem Basisteil und dem Kopfteil angeordnet ist, umfasst, wobei eine Nennhöhe Hn der Aussparung (64) durch den minimalen radialen Abstand zwischen dem Basisteil (65) und dem Kopfteil (67) definiert wird, und wobei der Basisteil (65) in einer ersten Hauptebene des Querelements mit einem Kippbereich (70) versehen ist, der einen Übergang zwischen einem Oberteil des Querelements (63) mit einer im Wesentlichen konstanten Nenndicke Dn des Querelements (63) und einem Unterteil davon bildet, wobei die Dicke davon in radial nach innen verlaufender Richtung auf eine kleinste Dicke Dm des Querelements (63) abnimmt, **dadurch gekennzeichnet, dass**
- die Nenndicke Dn des Querelements (63) größer als 103% der Nennhöhe Hn der Aussparungen (64) ist,
- die minimale Dicke Dm des Querelements (63) weniger als 97% der Nennhöhe Hn der Aussparungen (64) entspricht und dass
- wo die lokale Dicke des Querelements (63) der Nennhöhe Hn der Aussparungen (64) entspricht, die erste Hauptebene und eine zweite Hauptebene des Querelements (63) in einem Winkel θ von mindestens 8 Grad, vorzugsweise ungefähr 10 Grad, bezüglich einander ausgerichtet sind.

## Revendications

1. Elément transversal (63) pour une courroie d'entraînement (6) pour une transmission à variation continue (1) ayant deux poulies (4, 5) composées chacune de deux rouets de poulie (7, 8 ; 9, 10), avec une surface de contact au moins en partie conique, lesquels, par paires, enferment la courroie d'entraînement (6), lequel élément transversal étant pourvu d'un retrait (64) pour recevoir au moins en partie un jeu de bagues (61) de la courroie d'entraînement (6), et lequel élément comprenant une partie de base (65) située radialement à l'intérieur du retrait (64), une partie de tête (67) située radialement à l'extérieur du retrait (64), et une pièce de connexion (66) située entre la partie de base et la partie de tête, une hauteur nominale Hn du retrait (64) étant définie par la distance radiale minimale entre la partie de base (65) et la partie de tête (67), et la partie de base (65), dans un premier plan principal de l'élément transversal, étant pourvue d'une région d'inclinaison (70) qui forme une transition entre une partie supérieure de l'élément transversal (63) avec une épaisseur nominale substantiellement constante Dn de l'élément transversal (63) et une partie inférieure de celui-ci, dont l'épaisseur diminue dans la direction radialement vers l'intérieur, jusqu'à une épaisseur minimale Dm de l'élément transversal (63), **caractérisé en ce que** l'épaisseur nominale Dn de l'élément transversal (63) est comprise entre 90% et 97%, de préférence est de 92%, de la hauteur nominale Hn du retrait (64).

2. Elément transversal (63) pour une courroie d'entraînement (6) pour une transmission à variation continue (1) ayant deux poulies (4, 5) composées chacune de deux rouets de poulie (7, 8; 9, 10), avec une surface de contact au moins en partie conique, lesquels, par paires, enferment la courroie d'entraînement (6), lequel élément transversal étant pourvu d'un retrait (64) pour recevoir au moins en partie un jeu de bagues (61) de la courroie d'entraînement (6), et lequel élément comprenant une partie de base (65) située radialement à l'intérieur du retrait (64), une partie de tête (67) située radialement à l'extérieur du retrait (64), et une pièce de connexion (66) située entre la partie de base et la partie de tête, une hauteur nominale Hn du retrait (64) étant définie par la distance radiale minimale entre la partie de base (65) et la partie de tête (67), et la partie de base (65), dans un premier plan principal de l'élément transversal, étant pourvue d'une région d'inclinaison (70) qui forme une transition entre une partie supérieure de l'élément transversal (63) avec une épaisseur nominale substantiellement constante Dn de l'élément transversal (63) et une partie inférieure de celui-ci, dont l'épaisseur diminue dans la direction radialement vers l'intérieur, jusqu'à une épaisseur minimale Dm de l'élément transversal (63), **caractérisé en ce que** l'épaisseur minimale Dm de l'élément transversal (63) est comprise entre 103% et 110% de la hauteur nominale Hn du retrait (64).

3. Elément transversal (63) pour une courroie d'entraînement (6) pour une transmission à variation continue (1) ayant deux poulies (4, 5) composées chacune de deux rouets de poulie (7, 8 ; 9, 10), avec une surface de contact au moins en partie conique, lesquels, par paires, enferment la courroie d'entraînement (6), lequel élément transversal étant pourvu d'un retrait (64) pour recevoir au moins en partie un jeu de bagues (61) de la courroie d'entraînement (6), et lequel élément comprenant une partie de base (65) située radialement à l'intérieur du retrait (64), une partie de tête (67) située radialement à l'extérieur du retrait (64), et une pièce de connexion (66) située entre la partie de base et la partie de tête, une hauteur nominale Hn du retrait (64) étant définie par la distance radiale minimale entre la partie de base (65) et la partie de tête (67), et la partie de base (65), dans un premier plan principal de l'élément transversal, étant pourvue d'une région d'inclinaison (70) qui forme une transition entre une partie supérieure de l'élément transversal (63) avec une épaisseur nominale substantiellement constante Dn de l'élément transversal (63) et une partie inférieure de celui-ci, dont l'épaisseur diminue dans la direction radialement vers l'intérieur, jusqu'à une épaisseur minimale Dm de l'élément transversal (63), **caractérisé en ce que**
- l'épaisseur nominale Dn de l'élément transversal (63) est supérieure à 103% de la hauteur nominale Hn des retraits (64),
- l'épaisseur minimale Dm de l'élément transversal (63) est inférieure à 97% de la hauteur nominale Hn des retraits (64), et **en ce que**
- lorsque l'épaisseur locale de l'élément transversal (63) correspond à la hauteur nominale Hn des retraits (64), ledit premier plan principal et un deuxième plan principal de l'élément transversal (63) sont orientés suivant un angle θ d'au moins 6 degrés, de préférence d'environ 10 degrés, l'un par rapport à l'autre.
